# FASCICULE DE BREVET EUROPEEN

(11) **EP 1 964 359 B1**
(45) Date de publication et mention de la délivrance du brevet: **21.08.2013**
(21) Numéro de dépôt: 06829716.7
(22) Date de dépôt: 18.12.2006
(51) Int. Cl.: H04L 29/06

(54) **PROCEDE ET SYSTEME DE MISE A JOUR DES CONDITIONS D'ACCES D'UN DISPOSITIF DE TELECOMMUNICATION A DES SERVICES DELIVRES PAR UN RESEAU DE TELECOMMUNICATION**
VERFAHREN UND SYSTEM ZUM AKTUALISIEREN DER TELEKOMMUNIKATIONSNETZ-DIENSTZUGANGSBEDINGUNGEN EINER TELEKOMMUNIKATIONSEINRICHTUNG
METHOD AND SYSTEM FOR UPDATING THE TELECOMMUNICATION NETWORK SERVICE ACCESS CONDITIONS OF A TELECOMMUNICATION DEVICE

(30) Priorité: 20.12.2005 FR 0512994
(43) Date de publication de la demande: 03.09.2008
(73) Titulaire: FRANCE TELECOM, 75015 Paris (FR)
(72) Inventeur: MINODIER, David, F-22300 Lannion (FR); IVANOFF, Gilles, F-22560 Trebeurden (FR)
(74) Mandataire: Bioret, Ludovic
(86) Numéro de dépôt international: PCT/EP2006/012195
(87) Numéro de publication internationale: WO 2007/071360

(56) Documents cités:
- US-A1- 2003 194 090
- US-A1- 2003 231 722

## Description

La présente invention concerne un système et un procédé de mise à jour des conditions d'accès, par un dispositif de télécommunication, à des services délivrés par un réseau de télécommunication. Dans les systèmes classiques d'accès à des services délivrés par un réseau de télécommunication, tels que par exemple des systèmes d'accès à Internet, à la télévision sur Internet, à la téléphonie sur IP, etc., chaque dispositif de télécommunication accède au réseau de télécommunication par l'intermédiaire d'un point d'accès. Lorsque le dispositif de télécommunication est relié au point d'accès par une liaison filaire de type téléphonique et que la technique de modulation employée sur la liaison est de type DSL (Digital Subscriber Line), le point d'accès est appelé multiplexeur numérique de lignes de clients ou DSLAM (Digital Subscriber Line Access Multiplexor).

Le multiplexeur numérique de lignes de clients gère, pour chaque dispositif de télécommunication lui étant relié, les conditions d'accès aux services délivrés par le réseau de télécommunication.

Lorsque l'utilisateur d'un dispositif de télécommunication s'abonne à un nouveau service délivré par le réseau de télécommunication ou désire que les conditions d'accès à un service auquel il est déjà abonné soient modifiées, l'opérateur du réseau de télécommunication doit intervenir au niveau du multiplexeur de lignes de clients pour modifier les conditions d'accès du dispositif de télécommunication aux services délivrés par le réseau de télécommunication.

Le délai d'intervention est souvent long, parfois de l'ordre de quelques jours, car il est effectué par des employés de l'opérateur du réseau de télécommunication.

Ce délai d'intervention ne permet pas à l'opérateur du réseau de télécommunication de modifier les conditions d'accès aux services délivrés par le réseau de télécommunication dans le cadre d'opérations ponctuelles et temporaires pour, par exemple, offrir la possibilité d'essayer un nouveau service ou d'essayer une nouvelle qualité de service supérieure à celle à laquelle l'utilisateur du réseau de télécommunication est abonné.

De plus, la modification des conditions d'accès du dispositif de télécommunication aux services délivrés par le réseau de télécommunication étant soumise à une intervention humaine, le coût lié à la modification est non négligeable pour l'opérateur du réseau de télécommunication.

Sont connues aussi des techniques dans lesquelles un dispositif de télécommunication doit s'authentifier pour accéder à des services délivrés par un réseau de télécommunication. Lors de l'authentification du dispositif de télécommunication, le multiplexeur numérique de lignes de clients obtient le profil qui est associé aux données d'authentification transférées par le dispositif de télécommunication lors du processus d'authentification du dispositif de télécommunication et gère les conditions d'accès du dispositif de télécommunication aux services délivrés par le réseau de télécommunication à partir du profil obtenu. Le document US 2003/0231772 décrit un système de mise à jour des conditions d'accès par un dispositif de télécommunication délivrés par un réseau de télécommunication. Le document décrit un système pour mettre à jour une clé de cryptage utilisée dans un réseau, et plus particulièrement un système pour mettre à jour une clé de cryptage au moyen d'un réseau sans fil.

Ces techniques n'abordent pas le problème de la mise à jour des conditions d'accès du dispositif de télécommunication aux services délivrés par le réseau de télécommunication.

L'invention cherche à résoudre les inconvénients de l'art antérieur en proposant un système et un procédé de mise à jour des conditions d'accès, par un dispositif de télécommunication, à des services délivrés par un réseau de télécommunication qui soit plus rapide que la solution proposée dans l'état de la technique sans avoir à modifier ou remplacer des éléments associés au réseau de télécommunication existant actuellement tels que par exemple les points d'accès au réseau de télécommunication.

A cette fin, selon un premier aspect, l'invention propose un système de mise à jour des conditions d'accès, par un dispositif de télécommunication, à des services délivrés par un réseau de télécommunication, le système comprenant un point d'accès du réseau de télécommunication par l'intermédiaire duquel le dispositif de télécommunication accède audit réseau et une base de données, le système authentifiant le dispositif de télécommunication par l'intermédiaire du point d'accès, en fonction de données d'authentification transférées par le dispositif de télécommunication et d'un profil associé aux données d'authentification mémorisé parla base de données, le point d'accès comportant des moyens pour gérer, suite à une première authentification du dispositif de télécommunication, les conditions d'accès du dispositif de télécommunication aux services délivrés par le réseau de télécommunication à partir du profil associé aux données d'authentification, caractérisé en ce que le système comporte des moyens de génération d'une commande pour une seconde authentification du dispositif de télécommunication par l'intermédiaire du point d'accès suite à une modification du profil associé aux données d'authentification.

Corrélativement, l'invention concerne un procédé de mise à jour des conditions d'accès, par un dispositif de télécommunication, à des services délivrés par un réseau de télécommunication, le dispositif de télécommunication accédant au réseau de télécommunication par l'intermédiaire d'un point d'accès dudit réseau de télécommunication, le dispositif de télécommunication étant préalablement authentifié pour accéder aux services délivrés par le réseau de télécommunication, l'authentification du dispositif de télécommunication étant effectuée par l'intermédiaire du point d'accès en fonction de données d'authentification transférées par le dispositif de télécommunication, et d'un profil associé aux données d'authentification mémorisé dans une base de données, le point d'accès gérant, suite à l'authentification du dispositif de télécommunication, les conditions d'accès du dispositif de télécommunication aux services délivrés par le réseau de télécommunication à partir du profil associé aux données d'authentification, caractérisé en ce que le procédé comporte une étape de génération d'une commande pour une seconde authentification du dispositif de télécommunication par l'intermédiaire du point d'accès suite à une modification du profil associé aux données d'authentification.

Ainsi, en commandant une seconde authentification du dispositif de télécommunication, bien que le dispositif de télécommunication soit déjà authentifié, on provoque l'obtention, par le point d'accès, d'un profil modifié associé aux données d'authentification transférées par le dispositif de télécommunication. Le point d'accès modifie ainsi les conditions d'accès du dispositif de télécommunication aux services délivrés par le réseau de télécommunication à partir du profil modifié.

La mise à jour des conditions d'accès du dispositif de télécommunication aux services délivrés par le réseau de télécommunication est ainsi effectuée rapidement.

Cette rapidité de mise à jour permet ainsi d'offrir la possibilité à l'utilisateur du dispositif de télécommunication d'essayer un nouveau service ou d'essayer une qualité de service associée à un service supérieure à celle à laquelle il est abonné.

Selon un autre aspect de l'invention, le système comprend un portail d'abonnement accessible par l'intermédiaire du réseau de télécommunication.

Ainsi, il n'est pas nécessaire de modifier les différents éléments associés au réseau de télécommunication. En ajoutant un portail d'abonnement accessible par l'intermédiaire du réseau de télécommunication, la présente invention peut être implémentée dans un réseau de télécommunication existant sans effectuer de modifications complexes des éléments associés au réseau de télécommunication. Selon un autre aspect de l'invention, le portail d'abonnement :
- détecte l'accès d'un utilisateur du dispositif de télécommunication au portail d'abonnement,
- identifie l'utilisateur du dispositif de télécommunication,
- obtient, de la base de données, le profil associé aux données d'authentification transférées par le dispositif de télécommunication lors de l'authentification du dispositif de télécommunication,
- obtient des informations représentatives de services délivrés par le réseau de télécommunication et/ou des qualités de service associées aux services délivrés par le réseau de télécommunication,
- transfère au dispositif de télécommunication, au moins certaines informations comprises dans le profil et au moins certaines des informations représentatives de services délivrés par le réseau de télécommunication et/ou des qualités de service associées aux services délivrés par le réseau de télécommunication,
- reçoit, du dispositif de télécommunication, au moins un message de réponse aux informations transférées,
- modifie le profil associé aux données d'authentification en fonction dudit au moins un message reçu du dispositif de télécommunication.

Ainsi, la modification du profil associé aux données d'authentification est effectuée automatiquement sans intervention de l'opérateur du réseau de télécommunication.

Selon un autre aspect de l'invention, les moyens de génération de la commande pour une seconde authentification du dispositif de télécommunication sont compris dans le portail d'abonnement.

Ainsi, il n'est pas nécessaire de modifier les différents éléments associés au réseau de télécommunication.

Selon un autre aspect de l'invention, le système comprend un serveur d'authentification auquel est associée la base de données mémorisant le profil associé aux données d'authentification et les moyens de génération de la commande pour une seconde authentification du dispositif de télécommunication sont compris dans le serveur d'authentification.

Ainsi, la mise à jour des conditions d'accès du dispositif de télécommunication aux services délivrés par le réseau de télécommunication est effectuée rapidement.

Selon un autre aspect de l'invention, la commande pour une seconde authentification du dispositif de télécommunication est transférée au point d'accès.

Ainsi, en provoquant une seconde authentification du dispositif de télécommunication bien que le dispositif de télécommunication soit déjà authentifié, on provoque une nouvelle réception, par le point d'accès, du profil modifié associé aux données d'authentification transférées par le dispositif de télécommunication.

Selon un autre aspect de l'invention, la commande pour une seconde authentification du dispositif de télécommunication est transférée au dispositif de télécommunication.

Selon un autre aspect de l'invention, le dispositif de télécommunication est un premier dispositif de télécommunication auquel sont reliés des seconds dispositifs de télécommunication.

Ainsi, seul le profil associé aux données d'authentification transférées par le premier dispositif de télécommunication est mémorisé dans la base de données. La gestion de la base de données est ainsi simplifiée.

Selon un autre aspect de l'invention, le dispositif de télécommunication est un second dispositif de télécommunication qui est relié au point d'accès par l'intermédiaire d'un premier dispositif de télécommunication.

Ainsi, la présente invention peut aussi être implémentée sans qu'il soit nécessaire de remplacer les premiers dispositifs de télécommunication qui ne disposent pas de moyens permettant leur authentification selon la présente invention.

En effet, si le second dispositif de télécommunication est par exemple un ordinateur, une mise à jour de celui-ci, pour l'obtention de moyens permettant une authentification selon la présente invention, est facilement réalisable.

Selon un autre aspect de l'invention, l'accès aux services délivrés par le réseau de télécommunication est maintenu tant que la seconde authentification du dispositif de télécommunication n'est pas infirmée.

Ainsi, l'accès aux services pendant la seconde authentification du dispositif de télécommunication n'est pas interrompu.

L'invention concerne aussi le programme d'ordinateur stocké sur un support d'informations, ledit programme comportant des instructions permettant de mettre en oeuvre le procédé précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture d'un système de mise à jour des conditions d'accès, par un dispositif de télécommunication, à des services délivrés par un réseau de télécommunication selon la présente invention;
la Fig. 2 représente l'algorithme de mise à jour des conditions d'accès, par un dispositif de télécommunication, à des services délivrés par un réseau de télécommunication selon la présente invention.

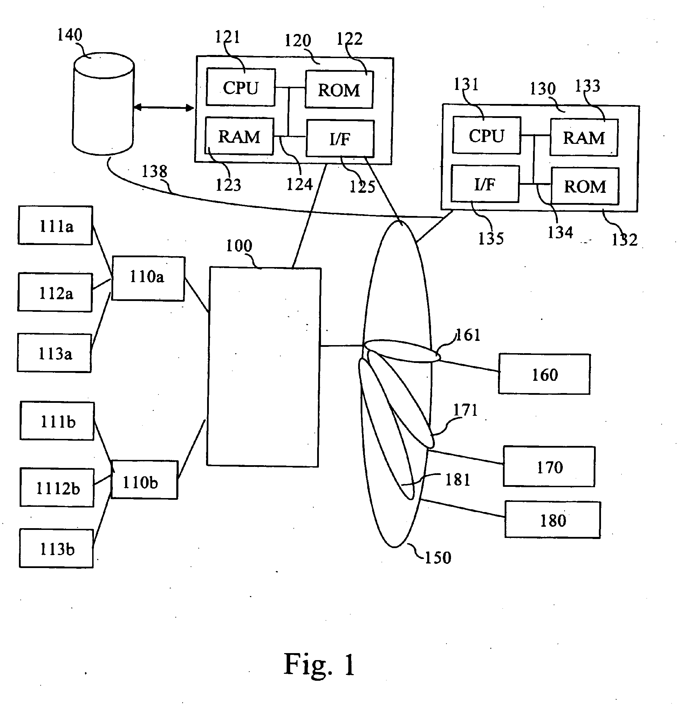

La Fig. 1 représente l'architecture d'un système de mise à jour des conditions d'accès, par un dispositif de télécommunication, à des services délivrés par un réseau de télécommunication selon la présente invention.

Dans ce système de mise à jour des conditions d'accès à des services délivrés par un réseau de télécommunication 150, des premiers dispositifs de télécommunication 110a et 110b ou des seconds dispositifs de télécommunication 111a, 111b, 112a, 112b, 113a ou 113b sont prévus pour pouvoir accéder à des services fournis par des fournisseurs de services 160, 170 et 180.Les fournisseurs de services 160, 170 et 180 sont respectivement, par exemple et de manière non limitative, un fournisseur d'accès à Internet, un fournisseur de services audiovisuels tels qu'un fournisseur de télévision et/ou un fournisseur de vidéo à la demande, un fournisseur de services de téléphonie sur Internet et/ou de visioconférence.

Les conditions d'accès aux services délivrés par le réseau de télécommunication 150 sont par exemple et non limitativement : l'accès autorisé ou non aux services fournis par les fournisseurs de services 160, 170 et 180, la qualité de service associée à chaque service dont l'accès est autorisé, le débit alloué au service autorisé, etc.

Préférentiellement et de manière non limitative, le système de mise à jour des conditions d'accès, par un dispositif de télécommunication 110, 111, 112 ou 113, à des services délivrés par le réseau de télécommunication 150, utilise un protocole de contrôle d'accès tel que le protocole défini dans le standard IEEE 802. 1x.

Selon le protocole de contrôle d'accès tel que défini dans le standard IEEE 802.1x, trois éléments composent l'architecture de contrôle d'accès. Le « supplicant » est l'élément qui tente d'accéder au réseau en y demandant un accès. « L'authenticator » est l'élément qui assure le relais des informations liées à l'authentification du « supplicant » vers un serveur d'authentification 120 ou « authentication server ». Le serveur d'authentification 120 est l'élément qui valide l'accès du « supplicant » au réseau de télécommunication 150. Préférentiellement, les informations sont échangées entre l'élément « authenticator » et « l'authentication server » conformément au protocole EAP, acronyme de « Extensible Authentication Protocol » lui-même encapsulé dans le protocole Radius. Les informations échangées entre l'élément « supplicant » et l'élément « authenticator » sont conformes au protocole EAPoL, acronyme de « EAP Over Lan ».

Préférentiellement, l'élément « supplicant » est compris dans le premier dispositif de télécommunication 110, l'élément « authenticator » est compris dans le point d'accès 100 et « l'authentication server » est le serveur d'authentification 120.

Dans une variante de réalisation, l'élément « supplicant » est compris dans un second dispositif de télécommunication 111, 112 ou 113 relié à un premier dispositif de télécommunication 110, l'élément « authenticator » est compris dans le point d'accès 100 et « l'authentication server » est le serveur d'authentification 120. Selon cette variante de réalisation, les premiers dispositifs de télécommunication 110a et 110b autorisent de manière transparente les échanges de trames conformes au standard IEEE. 802.1x ou au protocole EAPoL.

Les premiers dispositifs de télécommunication 110a et 110b sont préférentiellement des modems routeurs qui sont installés au domicile de chaque abonné aux services fournis par le réseau de télécommunication 150.

Chaque premier dispositif de télécommunication 110a ou 110b, accède aux services délivrés par le réseau de télécommunication 150 par l'intermédiaire du point d'accès 100. Les premiers dispositifs de télécommunication 110 sont reliés au point d'accès 100 par l'intermédiaire de liaisons de type radio telles que par exemple, conformes au standard WiMax, abréviation de « Worldwide Interroperability for Microwave Access » ou au standard Wi-Fi (contraction de Wireless Fidelity), ou de liaisons physiques telles que des paires de fils téléphoniques ou des fibres optiques.

Lorsque les liaisons sont de type radio, le point d'accès 100 est par exemple une borne WiMax. Lorsque les liaisons sont des paires de fils de cuivre téléphoniques, le point d'accès 100 est un multiplexeur numérique de lignes de clients, communément appelé DSLAM. Lorsque les liaisons sont des fibres optiques, le point d'accès 100 est un concentrateur optique.

Lorsque les liaisons sont des paires de fils de cuivre téléphoniques, les premiers dispositifs de télécommunication 110 utilisent les techniques de modulation de type DSL.

Les seconds dispositifs de télécommunication 111a, 112a et 113a sont respectivement reliés au premier dispositif de télécommunication 110a par une liaison sans fil, par exemple de type Wi-Fi, ou par une liaison filaire ou par une liaison optique. De la même manière, les seconds dispositifs de télécommunication 111b, 112b et 113b sont reliés au premier dispositif de télécommunication 110b.

Par exemple et de manière non limitative, les seconds dispositifs de télécommunication 111 sont des ordinateurs, les seconds dispositifs de télécommunication référencés 112 sont des décodeurs ou « Set Top Box » en anglais, les seconds dispositifs de télécommunication référencés 113 sont des dispositifs de téléphonie sur IP ou des dispositifs de visioconférence. Le point d'accès 100 comporte une pluralité de ports. Chaque port du point d'accès 100 est relié à un premier dispositif de télécommunication 110. Seuls deux premiers dispositifs de télécommunication 110a et 110b sont représentés à la Fig. 1, mais on comprendra que l'invention englobe également les cas où un nombre plus important de premiers dispositifs de télécommunication 110 sont reliés au point d'accès 100.

Le point d'accès 100 comporte, pour chaque port, un module logiciel PAE, acronyme de "Port Access Entity" tel que décrit dans le standard IEEE 802.1x. Le module logiciel PAE comprend un sous module logiciel client Radius, tel que recommandé dans le standard IEEE 802.1x qui dialogue avec le serveur d'authentification 120 selon le mode de relation client-serveur conformément au protocole Radius. En alternative, d'autres protocoles peuvent être utilisés entre l'élément « authenticator » et « l'authentication server ». Ces protocoles sont par exemple et de manière non limitative de type « Diameter » ou de type « TACACS » acronyme de « Terminal Access Controller Access Control System ».

Le point d'accès 100 est relié au réseau de télécommunication 150 qui est préférentiellement un réseau de type GigaEthernet. Un réseau de type GigaEthernet est un réseau de communication à haut débit basé sur la technologie Ethernet. Un réseau de type GigaEthernet autorise des transferts de données à des débits pouvant être supérieurs à un Gigabits par seconde.

Des sous réseaux de télécommunication 161, 171 et 181 sont établis sur le réseau de télécommunication 150 entre le point d'accès 100 et chaque fournisseur de services 160, 170 et 180. Les informations transférées dans les sous réseaux de télécommunication 161, 171 et 181 sont transmises sous la forme de trames Ethernet. Les sous réseaux 161, 171 et 181 permettent de différencier les ressources auxquelles les dispositifs de télécommunication 110 ou 111 ou 112 ou 113 ont accès. Par exemple, si l'utilisateur du premier dispositif de télécommunication 110a est abonné au fournisseur de services 170, les échanges entre le premier dispositif de télécommunication 110a et le fournisseur de services 170 sont effectués uniquement par l'intermédiaire du sous réseau 171.

Si l'utilisateur du premier dispositif de télécommunication 110a est abonné au fournisseur de services 160, les échanges entre le premier dispositif de télécommunication 110a et le fournisseur de services 160 sont effectués par l'intermédiaire du sous réseau 161. Si l'utilisateur du premier dispositif de télécommunication 110a est abonné au fournisseur de services 180, les échanges entre le premier dispositif de télécommunication 110a et le fournisseur de services 180 sont effectués par l'intermédiaire du sous réseau 181.

Les sous réseaux de télécommunication 161, 171 et 181 sont par exemple des réseaux virtuels appelés VLAN, acronyme de « Virtual Local Area Network », ou des sous réseaux de type MPLS acronyme de « Multi-Protocol Label Switching » ou des , sous réseaux IP.

Le point d'accès 100 est aussi relié au serveur d'authentification 120 par l'intermédiaire d'une liaison dédiée ou, en variante, par l'intermédiaire du réseau de télécommunication 150.

Le serveur d'authentification 120 authentifie un dispositif de télécommunication 110, 111, 112, 113 auprès du point d'accès 100 lorsque le dispositif de télécommunication 110, 111, 112 ou 113 désire accéder à un fournisseur de services 160 ou 170 ou 180. Cette authentification est effectuée à partir de données d'authentification transférées par le dispositif de télécommunication 110, 111, 112 ou 113.

Les données d'authentification sont par exemple et de manière non limitative, comprises dans une carte SIM insérée dans le dispositif de télécommunication et comprennent un identifiant unique de l'utilisateur du dispositif de télécommunication 110, 111, 112 ou 113 ou comprennent un identifiant unique du dispositif de télécommunication 110, 111, 112 ou 113 ou comprennent un identifiant de l'utilisateur du dispositif de télécommunication 110, 111, 112 ou 113 et un mot de passe crypté ou non.

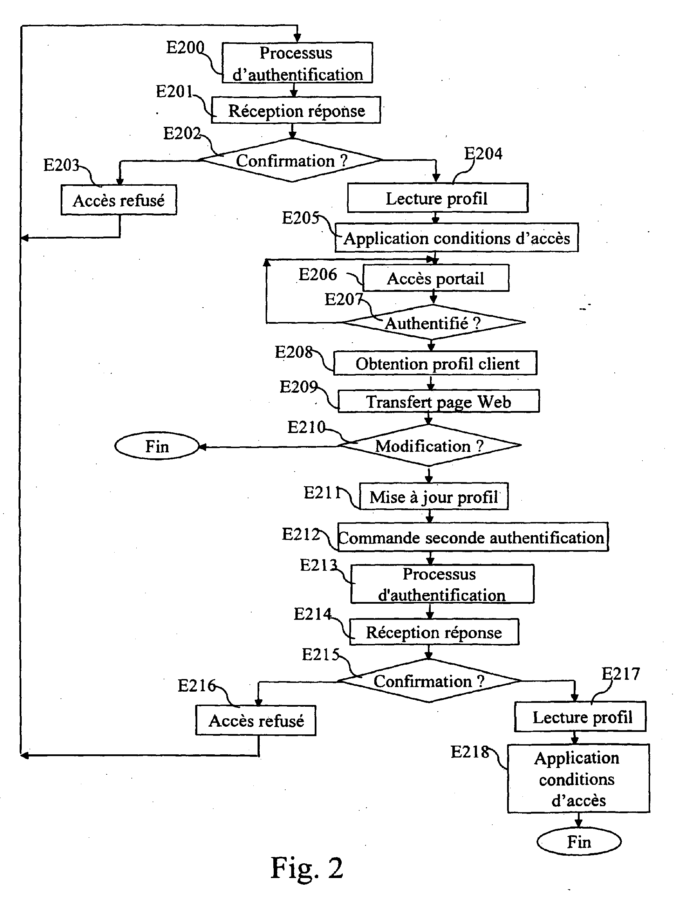

Cette authentification sera décrite plus en détail en regard de la Fig. 2.

Selon l'invention, le serveur d'authentification 120 délivre au point d'accès 100, lors de l'authentification d'un dispositif de télécommunication 110, 111, 112, ou 113, un profil associé aux données d'authentification transférées par le dispositif de télécommunication 110, 111, 112, 113 lors de l'authentification du dispositif de télécommunication 110, 111, 112, 113.

Ce profil est mémorisé dans une base de données 140 et comprend par exemple et de manière non limitative, l'identifiant de l'utilisateur du dispositif de télécommunication 110, 111, 112 ou 113, la liste de tous les services fournis par les fournisseurs de services 160, 170 et/ou 180 auxquels l'utilisateur du dispositif de télécommunication 110, 111, 112 ou 113 est abonné, la qualité de service associée à chaque service dont l'accès est autorisé, le débit alloué à chaque service autorisé, le sous réseau destiné à l'acheminement des informations associées à chaque service auquel l'utilisateur du dispositif de télécommunication 110, 111, 112 ou 113 est abonné.

La base de données 140 mémorise en outre les données d'authentification transférées par chaque dispositif de télécommunication 110, 111, 112 ou 113 enregistré pour accéder aux services respectivement proposés par les fournisseurs de services 160, 170 et/ou 180 et associe respectivement les données d'authentification à un profil. La base de données 140 est préférentiellement associée au serveur d'authentification 120.

Le serveur d'authentification 120 est par exemple un serveur d'authentification RADIUS tel que celui qui est préconisé dans le standard IEEE 802.1x. Radius est l'acronyme de « Remote Authentication Dial In User Service ». Il est à remarquer ici que d'autres types de serveurs et de protocoles d'authentification peuvent être utilisés dans le cadre de la présente invention.

Le serveur d'authentification 120 comporte un bus de communication 124 auquel sont reliées une unité centrale CPU 121, une mémoire non volatile 122, une mémoire vive 123 et une interface de télécommunication 125.

La mémoire non volatile 122 mémorise les programmes associés à au moins une partie de l'algorithme qui sera décrit ultérieurement en référence à la Fig. 2. La mémoire non volatile 122 est par exemple un disque dur. De manière plus générale, les programmes, selon la présente invention, sont mémorisés dans un moyen de stockage. Ce moyen de stockage est lisible par un ordinateur ou un microprocesseur 121. Ce moyen de stockage est intégré ou non au serveur d'authentification 120, et peut être amovible. Lors de la mise sous tension du serveur d'authentification 120, les programmes sont transférés dans la mémoire vive 123 qui contient alors le code exécutable de l'invention ainsi que les données nécessaires à la mise en oeuvre de l'invention.

L'interface de télécommunication 125 permet les échanges d'informations vers le réseau de télécommunication 150, le point d'accès 100 et la base de données 140 associée au serveur d'authentification 120.

Il est à remarquer aussi que le point d'accès 100 peut aussi accéder au serveur d'authentification 120 par l'intermédiaire d'un serveur relais ou « proxy-Radius » (non représenté en Fig. 1) qui redirige les informations transférées vers des serveurs d'authentification (non représentés en Fig. 1) associés à chaque fournisseur de services 160, 170 et 180. Selon cette variante, chaque serveur d'authentification associé à un fournisseur de services mémorise des informations associées à tous les dispositifs de télécommunication 110, 111, 112 ou 113, voire à leurs utilisateurs, autorisés à accéder aux services proposés par le fournisseur de services ainsi que les données d'authentification susceptibles d'être transférées par chaque dispositif de télécommunication 110, 111, 112 ou 113.

La base de données 140 est accessible par un portail d'abonnement 130 par l'intermédiaire d'une liaison notée 138 en Fig. 1.

Le portail d'abonnement 130 est accessible par les dispositifs de télécommunication 110, 111, 112 ou 113 par l'intermédiaire du point d'accès 100 et du réseau de télécommunication 150. Lorsqu'un utilisateur se connecte au portail d'abonnement 130 en utilisant un des dispositifs de télécommunication 110, 111, 112 ou 113, par exemple le second dispositif de télécommunication 111a, le portail d'abonnement 130 identifie, voire authentifie l'utilisateur et obtient en interrogeant la base de données 140 à partir de l'identifiant de l'utilisateur le profil associé aux données d'authentification que le dispositif de télécommunication 111a de l'utilisateur transfère lors d'une procédure d'authentification du dispositif de télécommunication 111a.

Le portail d'abonnement 130 génère par exemple une page Web représentant des informations comprises dans le profil associé aux données d'authentification ainsi que l'ensemble des services délivrés par le réseau de télécommunication 150 et les différentes qualités de service qui peuvent être associées à chaque service délivrés par le réseau de télécommunication 150. Le portail d'abonnement 130 transfère la page Web au second dispositif de télécommunication 111a.

Les informations comprises dans le profil associé aux données d'authentification et présentées dans la page WEB sont la liste de tous les services fournis par les fournisseurs de services 160, 170 et/ou 180 auxquels l'utilisateur du dispositif de télécommunication 111a est abonné, la qualité de service associée à chaque service dont l'accès est autorisé, le débit alloué à chaque service autorisé.

Le portail d'abonnement 130 transfère la page Web au second dispositif de télécommunication 111a.

L'utilisateur du second dispositif de télécommunication 111a sélectionne/désélectionne des services et/ou sélectionne une qualité de service parmi l'ensemble des qualités de service associées à chaque service auquel il est abonné ou s'abonne.

Le portail d'abonnement 130 détermine, en fonction des différentes opérations effectuées par l'utilisateur du second dispositif de télécommunication 111a, si le profil associé aux données d'authentification doit être modifié. Dans l'affirmative, le portail d'abonnement 130 met à jour, dans la base de données 140 associée au serveur d'authentification 120, le profil associé aux données d'authentification que le dispositif de télécommunication 111a transfère lors d'une procédure d'authentification.

Le portail d'abonnement 130 consulte et modifie le contenu de la base de données 140 par exemple à partir d'un langage de type SQL (Structured Query Language) ou LDAP (Lightweight Directory Access Protocol).

Si le profil associé aux données d'authentification est modifié, le portail d'abonnement 130 génère une commande pour une seconde authentification du dispositif de télécommunication 111a.

Dans une autre variante de réalisation, le serveur d'authentification 120 détecte que le profil associé aux données d'authentification que le dispositif de télécommunication 111a transfère lors d'une procédure d'authentification a été modifié et génère une commande pour une seconde authentification du dispositif de télécommunication 111 a.

Le portail d'abonnement 130 comporte un bus de communication 134 auquel sont reliées une unité centrale CPU 131, une mémoire non volatile 132, une mémoire vive 133 et une interface de télécommunication 135.

La mémoire non volatile 132 mémorise les programmes associés à au moins une partie de l'algorithme qui sera décrit ultérieurement en référence à la Fig. 2. La mémoire non volatile 132 est par exemple un disque dur. De manière plus générale, les programmes selon la présente invention sont mémorisés dans un moyen de stockage. Ce moyen de stockage est lisible par un ordinateur ou un microprocesseur 131. Ce moyen de stockage est intégré ou non au portail d'abonnement 130, et peut être amovible. Lors de la mise sous tension du portail d'abonnement 130, les programmes sont transférés, dans la mémoire vive 123 qui contient alors le code exécutable de l'invention ainsi que les données nécessaires à la mise en oeuvre de l'invention.

L'interface de télécommunication 135 permet les échanges de données vers le réseau de télécommunication 150, le point d'accès 100 et la base de données 140 associée au serveur d'authentification 120.

La Fig. 2 représente l'algorithme de mise à jour des conditions d'accès, par un dispositif de télécommunication à des services délivrés par un réseau de télécommunication selon la présente invention.

L'étape E200 est un premier processus d'authentification d'un dispositif de télécommunication 110, 111, 112 ou 113. Le point d'accès 100 reçoit une requête d'authentification d'un dispositif de télécommunication 110, 111, 112 ou 113, par exemple du second dispositif de télécommunication 111a.

Plus précisément, le second dispositif de télécommunication 111a émet une trame de type EAPoL-Start conforme au protocole EAPoL pour initier le processus d'authentification conformément au protocole 802.1x.

Le second dispositif de télécommunication 111a et le serveur d'authentification 120 échangent des informations via le module logiciel PAE du point d'accès 100 conformément aux protocoles EAP, EAPoL et Radius et en fonction de la méthode d'authentification négociée entre le second dispositif de télécommunication 111a et le serveur d'authentification 120. La méthode d'authentification est, par exemple, de type TLS, acronyme de « Transport Layer Security », telle que définie dans le document de l'IETF RFC 2246 ou de type MD5, acronyme de « Message Digest 5 ».

Lors de ces échanges, le second dispositif de télécommunication 111a fournit au serveur d'authentification 120 les données d'authentification. A la fin de ces échanges, et si les données d'authentification transmises par le second dispositif de télécommunication 111a sont validées par le serveur d'authentification 120, le serveur d'authentification 120 obtient, de la base de données 140, le profil associé aux données d'authentification transférées par le second dispositif de télécommunication 111a.

A l'étape suivante E201, le point d'accès 100 reçoit une réponse du serveur d'authentification 120.

A l'étape suivante E202, le point d'accès 100 vérifie si la réponse transmise par le serveur d'authentification 120 est une confirmation de l'authentification du second dispositif de télécommunication 111a.

Si la réponse transmise par le serveur d'authentification 120 infirme l'authentification du second dispositif de télécommunication 111a, le point d'accès 100 passe à l'étape E203 qui consiste à laisser le port auquel est relié le second dispositif de télécommunication 111 a dans l'état "non autorisé" et donc à interdire l'accès aux services délivrés par le réseau de télécommunication 150. Le point d'accès 100 retourne alors à l'étape E200 en attente d'une nouvelle requête d'authentification.

Dans l'affirmative, le point d'accès 100 passe à l'étape E204.

A cette étape, le point d'accès 100 lit, dans la réponse du serveur d'authentification 120 reçue à l'étape E201, le profil associé aux données d'authentification transférées par le second dispositif de télécommunication 111a.

A l'étape suivante E205, le point d'accès 100 gère les conditions d'accès du second dispositif de télécommunication 111a aux services délivrés par le réseau de télécommunication 150.

Le point d'accès 100 autorise l'accès ou non aux sous réseaux 161, 171 et 181 en fonction du profil associé aux données d'authentification transférées par le second dispositif de télécommunication 111a et applique la qualité de service associée à chaque service autorisé.

A l'étape suivante E206, le portail d'abonnement 130 détecte la réception d'un message issu du second dispositif de télécommunication 111a.

L'étape suivante E207 consiste en une identification et préférentiellement une authentification de l'utilisateur du second dispositif de télécommunication 111a, par exemple par interrogation de l'identifiant et du mot de passe de l'utilisateur du second dispositif de télécommunication 111a. Si l'authentification de l'utilisateur du second dispositif de télécommunication 111a échoue, le portail d'abonnement 130 retourne à l'étape E206. Si l'utilisateur du second dispositif de télécommunication 111a est authentifié, le portail d'abonnement 130 passe à l'étape E208.

A l'étape E208, le portail d'abonnement 130 interroge, par l'intermédiaire de la liaison 138, la base de données 140 à partir de l'identifiant de l'utilisateur du second dispositif de télécommunication 111a et obtient le profil associé aux données d'authentification que le second dispositif de télécommunication 111a transfère lors d'un processus d'authentification du dispositif de télécommunication 111a.

Il est à remarquer ici que dans une variante de réalisation, l'authentification de l'utilisateur peut être réalisée de façon automatique et transparente pour l'utilisateur par échange de clé ou de certificats. A l'étape suivante E209, le portail d'abonnement 130 génère une page Web représentant tous les services fournis par les fournisseurs de services 160, 170 et/ou 180 auxquels l'utilisateur du second dispositif de télécommunication 111a est abonné, la qualité de service associée à chaque service dont l'accès est autorisé, le débit alloué à chaque service autorisé à partir des informations comprises dans le profil associé aux données d'authentification ainsi que l'ensemble des services délivrés par le réseau de télécommunication 150 et les différentes qualités de service qui peuvent être associées à chaque service délivrés par le réseau de télécommunication 150 et transfère la page Web au second dispositif de télécommunication 111a.

L'utilisateur du second dispositif de télécommunication 111a sélectionne et/ou désélectionne des services et/ou sélectionne une qualité de service parmi l'ensemble des qualités de service associées à chaque service auquel il est abonné ou s'abonne.

A l'étape suivante E210, le portail d'abonnement 130 détermine, en fonction des différentes opérations effectuées par l'utilisateur du second dispositif de télécommunication 111a, si le profil associé aux données d'authentification transféré par le dispositif de télécommunication 111a lors d'un processus d'authentification du dispositif de télécommunication 111a doit être modifié. Dans la négative, le portail d'abonnement 130 interrompt le présent algorithme. Si le profil associé aux données d'authentification doit être modifié, le portail d'abonnement 130 passe à l'étape E211 et met à jour le profil associé aux données d'authentification dans la base de données 140.

En variante, le portail d'abonnement 130 n'exécute pas l'étape E210, passe à l'étape E211 et met systématiquement à jour le profil associé aux données d'authentification dans la base de données 140.

Il est à remarquer ici que dans une variante de réalisation, les étapes E206 à E210 ne sont pas effectuées par le portail d'abonnement 130. Selon cette variante, l'utilisateur du second dispositif de télécommunication 111a appelle un service d'assistance téléphonique de l'opérateur du réseau de télécommunication 150 ou se rend dans une agence de l'opérateur du réseau de télécommunication 150 pour consulter et modifier les conditions d'accès aux services fournis par le réseau de télécommunication 150.

Selon une autre variante de réalisation des étapes E206 à E210, le portail d'abonnement 130 génère une représentation d'au moins une partie des informations contenues dans le profil associé aux données d'authentification ainsi que l'ensemble des services délivrés par le réseau de télécommunication 150 et les différentes qualités de service qui peuvent être associées à chaque service délivrés par le réseau de télécommunication 150. Cette représentation est compatible avec le dispositif de télécommunication 110, 111, 112 ou 113 utilisé par l'utilisateur. Par exemple, le portail d'abonnement 130 génère une mire permettant à l'utilisateur du second dispositif de télécommunication 112a de sélectionner les chaînes de TV auxquelles il souhaite s'abonner au moyen de la télécommande du dispositif de télécommunication 112a. Selon une autre variante de réalisation, les étapes E206 à E210 ne sont pas effectuées par le portail d'abonnement 130. L'opérateur du réseau de télécommunication 150, décide de modifier les conditions d'accès aux services délivrés par le réseau de télécommunication 150 sans l'intervention de l'utilisateur du second dispositif de télécommunication 111a. Ceci est par exemple le cas lorsque l'opérateur du réseau de télécommunication décide d'établir une offre promotionnelle, limitée ou non dans le temps, sur certains des services délivrés par le réseau de télécommunication 150 ou de proposer à l'essai une qualité de service associée à un service supérieure à celle comprise dans le profil associé aux données d'authentification. De même, si le second dispositif de télécommunication 111a ou son utilisateur, n'est pas considéré comme fiable par l'opérateur de réseau de télécommunication 150, celui-ci peut réduire, voire supprimer son accès aux services délivrés par le réseau de télécommunication 150.

A l'étape E212, une commande pour une seconde authentification du second dispositif de télécommunication 111a est générée.

Préférentiellement, la commande pour une seconde authentification du second dispositif de télécommunication 111a est générée par le serveur d'authentification 120 suite à la détection d'une mise à jour du profil associé aux données d'authentification dans la base de données 140.

En variante, la commande pour une seconde authentification du second dispositif de télécommunication 111a est générée par le portail d'abonnement 130.

Dans une autre variante de réalisation, la commande pour une seconde authentification du second dispositif de télécommunication 111a est générée par un dispositif du réseau de télécommunication 150 lorsque celui-ci est informé, par exemple par le portail d'abonnement 130, de la mise à jour dans la base de données 140 du profil associé aux données d'authentification.

Préférentiellement, la commande pour une seconde authentification du second dispositif de télécommunication 111a est transmise au point d'accès 100. Le point d'accès 100, à la réception de cette commande transfère une commande d'authentification au second dispositif de télécommunication 111a. Cette commande d'authentification est par exemple une commande de type « reauth » telle que décrite dans le protocole IEEE 802.1x.

Il est à remarquer ici que la commande « reauth » maintient l'accès aux services délivrés par le réseau de télécommunication 150 tant que la seconde authentification du second dispositif de télécommunication 111a n'est pas infirmée par le serveur d'authentification 120.Dans une variante de réalisation, la commande pour une seconde authentification du second dispositif de télécommunication 111a est transmise au second dispositif de télécommunication 111a. Cette commande qui vise à prendre le contrôle du second dispositif de télécommunication 111a, déconnecte le second dispositif de télécommunication 111a du point d'accès 100 en commandant le transfert, par le second dispositif de télécommunication 111a au point d'accès 100, d'une trame de type EAPoL-Logoff du protocole EAPoL. Cette commande provoque aussi une nouvelle connexion du second dispositif de télécommunication 111a en commandant le transfert, par le second dispositif de télécommunication 111a au point d'accès 100, d'une trame de type EAPoL-Start du protocole EAPoL.

L'étape suivante E213 est un second processus d'authentification. Le second processus d'authentification est identique au premier processus d'authentification décrit à l'étape E200, il ne sera pas plus décrit.

A l'étape suivante E214, le point d'accès 100 reçoit une réponse du serveur d'authentification 120.

A l'étape suivante E215, le point d'accès 100 vérifie si la réponse transmise par le serveur d'authentification 120 est une confirmation de l'authentification du second dispositif de télécommunication 111a.

Si la réponse transmise par le serveur d'authentification 120 infirme l'authentification du second dispositif de télécommunication 111a, le point d'accès 100 passe à l'étape E216 qui consiste à mettre le port auquel est relié le second dispositif de télécommunication 111a dans l'état "non autorisé" et donc à interdire l'accès aux services délivrés par le réseau de télécommunication 150. Le point d'accès 100 retourne alors à l'étape E200 en attente d'une nouvelle requête d'authentification.

Si le test de l'étape E215 est positif, le point d'accès 100 passe à l'étape E217.

A cette étape, le point d'accès 100 lit, dans la réponse du serveur d'authentification 120 reçue à l'étape E214, le profil associé aux données d'authentification transférées par le second dispositif de télécommunication 111a.

A l'étape suivante E218, le point d'accès 100 gère les conditions d'accès du second dispositif de télécommunication 111a aux services délivrés par le réseau de télécommunication 150.

Le point d'accès 100 autorise l'accès ou non aux sous réseaux 161, 171 et 181 en fonction du profil associé aux données d'authentification transférées par le second dispositif de télécommunication 111a et applique la qualité de service associée à chaque service autorisé.

Ainsi, le point d'accès 100 effectue une mise à jour des conditions d'accès du second dispositif de télécommunication 111a.

## Revendications

1. Système de mise à jour des conditions d'accès, par un dispositif de télécommunication (110a, 110b, 111a, 111b, 112a, 112b, 113a, 113b), à des services délivrés par un réseau de télécommunication (150), le système comprenant :
- un point d'accès (100) du réseau de télécommunication par l'intermédiaire duquel le dispositif de télécommunication accède audit réseau,
- une base de données (140),
le point d'accès (100) comportant des moyens pour gérer les conditions d'accès du dispositif de télécommunication aux services délivrés par le réseau de télécommunication à partir, d'un profil mémorisé par la base de données, ledit profil étant associé à des données d'authentification transmises par le dispositif de télécommunication lors d'une première authentification par ledit système, et ledit profil comprenant une liste de services auxquels l'utilisateur du dispositif de télécommunication est abonné,
**caractérisé en ce que** le système comporte des moyens de génération d'une commande pour une seconde authentification du dispositif de télécommunication (110a, 110b, 111a, 111b, 112a, 112b, 113a, 113b) par l'intermédiaire du point d'accès (100) suite à une modification de ladite liste du profil associé aux données d'authentification.

2. Système selon la revendication 1, **caractérisé en ce que** le système comprend un portail d'abonnement (130) accessible par l'intermédiaire du réseau de télécommunication, et **en ce que en ce que** les moyens de génération de la commande pour une seconde authentification du dispositif de télécommunication sont compris dans le portail d'abonnement.

3. Système selon la revendication 1, **caractérisé en ce que** le système comprend un serveur d'authentification (120) auquel est associée la base de données mémorisant le profil associé aux données d'authentification et **en ce que** les moyens de génération de la commande pour une seconde authentification du dispositif de télécommunication sont compris dans le serveur d'authentification.

4. Système selon la revendication 1, **caractérisé en ce que** les moyens de génération de la commande pour une seconde authentification du dispositif de télécommunication transfèrent la commande pour une seconde authentification au point d'accès (100).

5. Système selon la revendication 1, **caractérisé en ce que** les moyens de génération de la commande pour une seconde authentification du dispositif de télécommunication transfèrent la commande pour une seconde authentification au dispositif de télécommunication (110a, 110b, 111a, 111b, 112a, 112b, 113a, 113b).

6. Système selon la revendication 5, **caractérisé en ce que** le dispositif de télécommunication est un premier dispositif de télécommunication (110a, 110b) auquel sont reliés des seconds dispositifs de télécommunication (111a, 111b, 112a, 112b, 113a, 113b).

7. Système selon la revendication 5, **caractérisé en ce que** le dispositif de télécommunication est un second dispositif de télécommunication (111a, 111b, 112a, 112b, 113a, 113b) relié au point d'accès par l'intermédiaire d'un premier dispositif de télécommunication (110a, 110b).

8. Système selon l'une quelconque des revendications précédentes, **caractérisé en ce que** le système comporte des moyens de maintien de l'accès aux services délivrés par le réseau de télécommunication tant que la seconde authentification du dispositif de télécommunication n'est pas infirmée.

9. Equipement réseau constituant un portail d'abonnement (130) accessible par au moins un dispositif de télécommunication (110a, 110b, 111a, 111b, 112a, 112b, 113a, 113b) par l'intermédiaire d'un point d'accès (100) à un réseau de télécommunication **caractérisé en ce que** le portail d'abonnement comporte des moyens de génération d'une commande pour une seconde authentification du dispositif de télécommunication (110a, 110b, 111a, 111b, 112a, 112b, 113a, 113b) par l'intermédiaire du point d'accès (100) suite à une modification d'un profil associé à des données d'authentification transmises par le dispositif de télécommunication lors d'une première authentification, ledit profil comprenant une liste de services auxquels l'utilisateur du dispositif de télécommunication est abonné.

10. Serveur d'authentification (120) accessible par au moins un dispositif de télécommunication (110a, 110b, 111a, 111b, 112a, 112b, 113a, 113b) par l'intermédiaire d'un point d'accès (100) à un réseau de télécommunication **caractérisé en ce que** le serveur d'authentification comporte des moyens de génération d'une commande pour une seconde authentification du dispositif de télécommunication (110a, 110b, 111a, 111b, 112a, 112b, 113a, 113b) par l'intermédiaire du point d'accès (100) suite à une modification d'un profil associé à des données d'authentification transmises par le dispositif de télécommunication lors d'une première authentification, ledit profil comprenant une liste de services auxquels l'utilisateur du dispositif de télécommunication est abonné.

11. Procédé de mise à jour des conditions d'accès, par un dispositif de télécommunication (110a, 110b, 111a, 111b, 112a, 112b, 113a, 113b), à des services délivrés par un réseau de télécommunication (150), le dispositif de télécommunication accédant au réseau de télécommunication par l'intermédiaire d'un point d'accès audit réseau de télécommunication, le procédé comportant une étape de gestion des conditions d'accès du dispositif de télécommunication aux services délivrés par le réseau de télécommunication à partir d'un profil mémorisé par une base de données, ledit profil étant associé à des données d'authentification transmises par le dispositif de télécommunication lors d'une première authentification par ledit système, et ledit profil comprenant une liste de services auxquels l'utilisateur du dispositif de télécommunication est abonné,
**caractérisé en ce que** le procédé comporte une étape de génération d'une commande pour une seconde authentification du dispositif de télécommunication (110a, 110b, 111a, 111b, 112a, 112b, 113a, 113b) par l'intermédiaire du point d'accès (100) suite à une modification de ladite liste du profil associé aux données d'authentification.

12. Procédé de mise à jour des conditions d'accès selon la revendication 11, **caractérisé en ce qu'**il comporte, dans un portail d'abonnement, préalablement à l'étape de génération de la commande pour une seconde authentification:
- une étape de détection (E206) de l'accès d'un utilisateur du dispositif de télécommunication,
- une étape d'identification (E207) de l'utilisateur du dispositif de télécommunication,
- une première étape d'obtention (E208), de la base de données, du profil associé aux données d'authentification transférées par le dispositif de télécommunication lors de son authentification,
- une seconde étape d'obtention (E209) d'informations représentatives de services délivrés par le réseau de télécommunication et/ou des qualités de service associées aux services délivrés par le réseau de télécommunication,
- une étape de transfert au dispositif de télécommunication d'au moins certaines informations comprises dans le profil et d'au moins certaines des informations représentatives de services délivrés par le réseau de télécommunication et/ou des qualités de service associées aux services délivrés par le réseau de télécommunication,
- une étape de réception, du dispositif de télécommunication, d'au moins un message de réponse aux informations transférées,
- une étape de modification (E211) du profil associé aux données d'authentification en fonction dudit au moins un message reçu du dispositif de télécommunication.

13. Programme d'ordinateur comportant des instructions pour la mise en oeuvre du procédé selon la revendication 11 lorsqu'il est exécuté par un processeur.

## Patentansprüche

1. System zur Aktualisierung der Zugangsbedingungen, durch eine Telekommunikationsvorrichtung (110a, 110b, 111a, 111b, 112a, 112b, 113a, 113b), zu von einem Telekommunikationsnetz (150) gelieferten Diensten, wobei das System enthält:
- einen Zugangspunkt (100) des Telekommunikationsnetzes, mittels dessen die Telekommunikationsvorrichtung in das Netz gelangt,
- eine Datenbank (140),
wobei der Zugangspunkt (100) Einrichtungen aufweist, um die Zugangsbedingungen der Telekommunikationsvorrichtung zu den vom Telekommunikationsnetz gelieferten Diensten ausgehend von einem von der Datenbank gespeicherten Profil zu verwalten, wobei das Profil Authentifizierungsdaten zugeordnet ist, die von der Telekommunikationsvorrichtung bei einer ersten Authentifizierung durch das System übertragen werden, und das Profil eine Liste von Diensten enthält, die der Benutzer der Telekommunikationsvorrichtung abonniert hat, **dadurch gekennzeichnet, dass** das System Einrichtungen zur Erzeugung eines Befehls für eine zweite Authentifizierung der Telekommunikationsvorrichtung (110a, 110b, 111a, 111b, 112a, 112b, 113a, 113b) mittels des Zugangspunkts (100) nach einer Änderung der Liste des den Authentifizierungsdaten zugeordneten Profils aufweist.

2. System nach Anspruch 1, **dadurch gekennzeichnet, dass** das System ein Abonnement-Portal (130) enthält, das über das Telekommunikationsnetz zugänglich ist, und dass die Einrichtungen zur Erzeugung des Befehls für eine zweite Authentifizierung der Telekommunikationsvorrichtung im Abonnement-Portal enthalten sind.

3. System nach Anspruch 1, **dadurch gekennzeichnet, dass** das System einen Authentifizierungsserver (120) enthält, dem die Datenbank zugeordnet ist, die das den Authentifizierungsdaten zugeordnete Profil speichert, und dass die Einrichtungen zur Erzeugung des Befehls für eine zweite Authentifizierung der Telekommunikationsvorrichtung im Authentifizierungsserver enthalten sind.

4. System nach Anspruch 1, **dadurch gekennzeichnet, dass** die Einrichtungen zur Erzeugung des Befehls für eine zweite Authentifizierung der Telekommunikationsvorrichtung den Befehl für eine zweite Authentifizierung an den Zugangspunkt (100) übertragen.

5. System nach Anspruch 1, **dadurch gekennzeichnet, dass** die Einrichtungen zur Erzeugung des Befehls für eine zweite Authentifizierung der Telekommunikationsvorrichtung den Befehl für eine zweite Authentifizierung an die Telekommunikationsvorrichtung (110a, 110b, 111a, 111b, 112a, 112b, 113a, 113b) übertragen.

6. System nach Anspruch 5, **dadurch gekennzeichnet, dass** die Telekommunikationsvorrichtung eine erste Telekommunikationsvorrichtung (110a, 110b) ist, mit der zweite Telekommunikationsvorrichtungen (111a, 111b, 112a, 112b, 113a, 113b) verbunden sind.

7. System nach Anspruch 5, **dadurch gekennzeichnet, dass** die Telekommunikationsvorrichtung eine zweite Telekommunikationsvorrichtung (111a, 111b, 112a, 112b, 113a, 113b) ist, die mit dem Zugangspunkt über eine erste Telekommunikationsvorrichtung (110a, 110b) verbunden ist.

8. System nach einem der vorhergehenden Ansprüche, **dadurch gekennzeichnet, dass** das System Einrichtungen zur Beibehaltung des Zugangs zu den vom Telekommunikationsnetz gelieferten Diensten, so lange die zweite Authentifizierung der Telekommunikationsvorrichtung nicht aufgehoben wird, aufweist.

9. Netzausrüstung, die ein für mindestens eine Telekommunikationsvorrichtung (110a, 110b, 111a, 111b, 112a, 112b, 113a, 113b) mittels eines Zugangspunkts (100) zu einem Telekommunikationsnetz zugängliches Abonnement-Portal (130) bildet, **dadurch gekennzeichnet, dass** das Abonnement-Portal Einrichtungen zur Erzeugung eines Befehls für eine zweite Authentifizierung der Telekommunikationsvorrichtung (110a, 110b, 111a, 111b, 112a, 112b, 113a, 113b) mittels des Zugangspunkts (100) nach einer Änderung eines von der Telekommunikationsvorrichtung bei einer ersten Authentifizierung übertragenen Authentifizierungsdaten zugeordneten Profils aufweist, wobei das Profil eine Liste von Diensten enthält, die der Benutzer der Telekommunikationsvorrichtung abonniert hat.

10. Authentifizierungsserver (120), der für mindestens eine Telekommunikationsvorrichtung (110a, 110b, 111a, 111b, 112a, 112b, 113a, 113b) mittels eines Zugangspunkts (100) zu einem Telekommunikationsnetz zugänglich ist, **dadurch gekennzeichnet, dass** der Authentifizierungsserver Einrichtungen zur Erzeugung eines Befehls für eine zweite Authentifizierung der Telekommunikationsvorrichtung (110a, 110b, 111a, 111b, 112a, 112b, 113a, 113b) mittels des Zugangspunkts (100) nach einer Änderung eines von der Telekommunikationsvorrichtung bei einer ersten Authentifizierung übertragenen Authentifizierungsdaten zugeordneten Profils aufweist, wobei das Profil eine Liste von Diensten enthält, die der Benutzer der Telekommunikationsvorrichtung abonniert hat.

11. Aktualisierungsverfahren der Zugangsbedingungen, durch eine Telekommunikationsvorrichtung (110a, 110b, 111a, 111b, 112a, 112b, 113a, 113b), zu von einem Telekommunikationsnetz (150) gelieferten Diensten, wobei die Telekommunikationsvorrichtung zum Telekommunikationsnetz mittels eines Zugangspunkts zum Telekommunikationsnetz gelangt, wobei das Verfahren einen Schritt der Verwaltung der Zugangsbedingungen der Telekommunikationsvorrichtung zu den vom Telekommunikationsnetz gelieferten Diensten ausgehend von einem von einer Datenbank gespeicherten Profil aufweist, wobei das Profil Authentifizierungsdaten zugeordnet ist, die von der Telekommunikationsvorrichtung bei einer ersten Authentifizierung durch das System übertragen werden, und das Profil eine Liste von Diensten enthält, die der Benutzer der Telekommunikationsvorrichtung abonniert hat, **dadurch gekennzeichnet, dass** das Verfahren einen Schritt der Erzeugung eines Befehls für eine zweite Authentifizierung der Telekommunikationsvorrichtung (110a, 110b, 111a, 111b, 112a, 112b, 113a, 113b) mittels des Zugangspunkts (100) nach einer Änderung der Liste des den Authentifizierungsdaten zugeordneten Profils aufweist.

12. Aktualisierungsverfahren der Zugangsbedingungen nach Anspruch 11, **dadurch gekennzeichnet, dass** es in einem Abonnement-Portal vor dem Schritt der Erzeugung des Befehls für eine zweite Authentifizierung aufweist:
- einen Schritt der Erfassung (E206) des Zugangs eines Benutzers der Telekommunikationsvorrichtung,
- einen Schritt der Erkennung (E207) des Benutzers der Telekommunikationsvorrichtung,
- einen ersten Schritt des Erhalts (E208), von der Datenbank, des den von der Telekommunikationsvorrichtung bei ihrer Authentifizierung übertragenen Authentifizierungsdaten zugeordneten Profils,
- einen zweiten Schritt des Erhalts (E209) von Informationen, die für vom Telekommunikationsnetz gelieferte Dienste und/oder für die den vom Telekommunikationsnetz gelieferten Diensten zugeordneten Dienstqualitäten repräsentativ sind,
- einen Schritt der Übertragung an die Telekommunikationsvorrichtung von mindestens bestimmten im Profil enthaltenen Informationen und von mindestens bestimmten der für vom Telekommunikationsnetz gelieferte Dienste und/oder für die den vom Telekommunikationsnetz gelieferten Diensten zugeordneten Dienstqualitäten repräsentativen Informationen,
- einen Schritt des Empfangs, von der Telekommunikationsvorrichtung, mindestens einer Antwortmitteilung auf die übertragenen Informationen,
- einen Schritt der Änderung (E211) des den Authentifizierungsdaten zugeordneten Profils abhängig von der mindestens einen von der Telekommunikationsvorrichtung empfangenen Mitteilung.

13. Computerprogramm, das Anweisungen zur Durchführung des Verfahrens nach Anspruch 11 aufweist, wenn es von einem Prozessor ausgeführt wird.

## Claims

1. System for updating the conditions of access, by a telecommunication device (110a, 110b, 111a, 111b, 112a, 112b, 113a, 113b), to services delivered by a telecommunication network (150), the system comprising:
- an access point (100) of the telecommunication network by way of which the telecommunication device accesses said network,
- a database (140),
the access point (100) comprising means for managing the conditions of access of the telecommunication device to the services delivered by the telecommunication network on the basis of a profile stored by the database, said profile being associated with authentication data transmitted by the telecommunication device upon a first authentication by said system, and said profile comprising a list of services to which the user of the telecommunication device is subscribed,
**characterized in that** the system comprises means for generating a command for a second authentication of the telecommunication device (110a, 110b, 111a, 111b, 112a, 112b, 113a, 113b) by way of the access point (100) subsequent to a modification of said list of the profile associated with the authentication data.

2. System according to Claim 1, **characterized in that** the system comprises a subscription portal (130) accessible by way of the telecommunication network, and **in that** the means for generating the command for a second authentication of the telecommunication device are included in the subscription portal.

3. System according to Claim 1, **characterized in that** the system comprises an authentication server (120) with which is associated the database storing the profile associated with the authentication data and **in that** the means for generating the command for a second authentication of the telecommunication device are included in the authentication server.

4. System according to Claim 1, **characterized in that** the means for generating the command for a second authentication of the telecommunication device transfer the command for a second authentication to the access point (100).

5. System according to Claim 1, **characterized in that** the means for generating the command for a second authentication of the telecommunication device transfer the command for a second authentication to the telecommunication device (110a, 110b, 111a, 111b, 112a, 112b, 113a, 113b).

6. System according to Claim 5, **characterized in that** the telecommunication device is a first telecommunication device (110a, 110b) to which are linked second telecommunication devices (111a, 111b, 112a, 112b, 113a, 113b).

7. System according to Claim 5, **characterized in that** the telecommunication device is a second telecommunication device (111a, 111b, 112a, 112b, 113a, 113b) linked to the access point by way of a first telecommunication device (110a, 110b).

8. System according to any one of the preceding claims, **characterized in that** the system comprises means for maintaining access to the services delivered by the telecommunication network as long as the second authentication of the telecommunication device is not denied.

9. Network equipment constituting a subscription portal (130) accessible by at least one telecommunication device (110a, 110b, 111a, 111b, 112a, 112b, 113a, 113b) by way of an access point (100) to a telecommunication network, **characterized in that** the subscription portal comprises means for generating a command for a second authentication of the telecommunication device (110a, 110b, 111a, 111b, 112a, 112b, 113a, 113b) by way of the access point (100) subsequent to a modification of a profile associated with authentication data transmitted by the telecommunication device upon a first authentication, said profile comprising a list of services to which the user of the telecommunication device is subscribed.

10. Authentication server (120) accessible by at least one telecommunication device (110a, 110b, 111a, 111b, 112a, 112b, 113a, 113b) by way of an access point (100) to a telecommunication network, **characterized in that** the authentication server comprises means for generating a command for a second authentication of the telecommunication device (110a, 110b, 111a, 111b, 112a, 112b, 113a, 113b) by way of the access point (100) subsequent to a modification of a profile associated with authentication data transmitted by the telecommunication device upon a first authentication, said profile comprising a list of services to which the user of the telecommunication device is subscribed.

11. Method for updating the conditions of access, by a telecommunication device (110a, 110b, 111a, 111b, 112a, 112b, 113a, 113b), to services delivered by a telecommunication network (150), the telecommunication device accessing the telecommunication network by way of an access point to said telecommunication network, the method comprising a step of managing the conditions of access of the telecommunication device to the services delivered by the telecommunication network on the basis of a profile stored by a database, said profile being associated with authentication data transmitted by the telecommunication device upon a first authentication by said system, and said profile comprising a list of services to which the user of the telecommunication device is subscribed,
**characterized in that** the method comprises a step of generating a command for a second authentication of the telecommunication device (110a, 110b, 111a, 111b, 112a, 112b, 113a, 113b) by way of the access point (100) subsequent to a modification of said list of the profile associated with the authentication data.

12. Method for updating the conditions of access according to Claim 11, **characterized in that** it comprises, in a subscription portal, prior to the step of generating the command for a second authentication:
- a step (E206) of detecting access of a user of the telecommunication device,
- a step (E207) of identifying the user of the telecommunication device,
- a first step (E208) of obtaining, from the database, the profile associated with the authentication data transferred by the telecommunication device upon authentication thereof,
- a second step (E209) of obtaining information representative of services delivered by the telecommunication network and/or service qualities associated with the services delivered by the telecommunication network,
- a step of transferring to the telecommunication device at least some information included in the profile and at least some of the information representative of services delivered by the telecommunication network and/or service qualities associated with the services delivered by the telecommunication network,
- a step of receiving, from the telecommunication device, at least one message of response to the information transferred,
- a step (E211) of modifying the profile associated with the authentication data as a function of said at least one message received from the telecommunication device.

13. Computer program comprising instructions for the implementation of the method according to Claim 11 when it is executed by a processor.
